# EUROPEAN PATENT SPECIFICATION

(11) **EP 3 586 628 B1**
(45) Date of publication and mention of the grant of the patent: **27.08.2025**
(21) Application number: 19182790.6
(22) Date of filing: 27.06.2019
(51) Int. Cl.: A01N 25/00, A01N 25/22, A01N 25/34, A01N 37/02, A01P 19/00

(54) **METHOD FOR CONTROLLING SAN JOSE SCALE**
VERFAHREN ZUR BEKÄMPFUNG DER SAN-JOSE-SKALA
PROCÉDÉ DE CONTRÔLE DE LA COCHENILLE DE SAN JOSÉ

(30) Priority: 29.06.2018 JP 2018124375; 17.04.2019 JP 2019078597
(43) Date of publication of application: 01.01.2020
(73) Proprietor: Shin-Etsu Chemical Co., Ltd., Tokyo 100-0005 (JP)
(72) Inventor: HOJO, Tatsuya, Joetsu-shi, Niigata 942-8601 (JP); KINSHO, Takeshi, Joetsu-shi, Niigata 942-8601 (JP); KUTSUWADA, Yasuhiko, Joetsu-shi, Niigata 942-8601 (JP); BABA, Akihiro, Joetsu-shi, Niigata 942-8601 (JP); FUJII, Tatsuya, Joetsu-shi, Niigata 942-8601 (JP)
(74) Representative: De Vries & Metman

(56) References cited:
- EP-A1- 3 504 968
- US-A- 3 866 349
- US-A- 4 223 012
- DATABASE CAPLUS [online] CHEMICAL ABSTRACTS SERVICE, COLUMBUS, OHIO, US; 1987, T I BICHINA, KOVALEV, B. G.; ISHCHENKO, R. I.; ROZINSKAYA, E. M.: "Scale coccid pheromones and their use in a practice of plant quarantine", XP055617033, Database accession no. 1987:454120
- R E RICE ET AL: "Efficacy of mating disruption pheromones in paraffin emulsion dispensers", PROCEEDINGS OF A WORKING GROUP MEETING IN MONTPELLIER, FRANCE, ON 9-10 SEPTEMBER 1996.; IOBC/WPRS BULLETIN, vol. 20, 1 January 1997 (1997-01-01), pages 151 - 161, XP055617058, DOI: http://phero.net/iobc/montpellier/rice.html
- D. C. MCCLAIN ET AL: "Influence of Trap Color and San Jose Scale (Homoptera: Diaspididae) Pheromone on Sticky Trap Catches of 10 Aphelinid Parasitoids (Hymenoptera)", ENVIRONMENTAL ENTOMOLOGY., vol. 19, no. 4, 1 August 1990 (1990-08-01), US, pages 926 - 931, XP055616797, ISSN: 0046-225X, DOI: 10.1093/ee/19.4.926
- ANDERSON R J ET AL: "Synthesis and identification of a third component of the San Jose scale sex pheromone", JOURNAL OF CHEMICAL ECOLOGY, SPRINGER, NL, vol. 7, no. 4, 1 July 1981 (1981-07-01), pages 695 - 706, XP009189768, ISSN: 0098-0331, DOI: 10.1007/BF00990302

## Description

### TECHNICAL FIELD

The present invention relates to a method for controlling San Jose scale.

### BACKGROUND ART

Scale insects are known to be serious insect pests to tea and fruit trees. In recent years, increasing damages have been caused on tea by white peach scale and on fruit trees by red scale, San Jose scale and Japanese mealybug.

Scale insects are less susceptible to chemicals, because their bodies and egg sacs are covered with a coating composed mainly of a waxy substance and therefore protected by the coating from the chemicals sprayed on them. Further, larvae emerge from egg sacs successively from the initiation of hatching and over a period of hatching which may last as long as several weeks, so that a variety of larvae of different developmental stages exist together. It is therefore extremely difficult to control the scale insects.

A technique for controlling insect pest with a mating disruption method using a sex pheromone substance was developed for one of the scale insects, Japanese mealybug *Planococcus kraunhiae* (Kuwana).

For example, there is a report that suppression of the population density of Japanese mealybug and a damage mitigation effect in persimmon orchards were realized by binding 10 rubber septa (each impregnated with 3 mg of a sex pheromone substance) with a wire and installing them at 167 locations in a 5-are (0.05-hectare) field such that the treatment amount of pheromone substances was 1 g/are (100 g/hectare) (Teshiba, M. et. al., "Use of a Sex Pheromone to Disrupt the Mating of Planococcus kraunhiae (Kuwana) (Hemiptera: Pseudococcidae)"; Applied Entomology and Zoology (2009) Vol. 53, No. 4, 173-180).

A compositional ratio was reported for a combination of three sex pheromone substances of San Jose scale, *Quadraspidiotus perniciosus*: 7-methyl-3-methylene-7-octenyl propionate; (Z)-3,7-dimethyl-2,7-octadienyl propionate; and (E)-3,7-dimethyl-2,7-octadienyl propionate (Anderson, R.J. et al, "Synthesis and identification of a third component of the San Jose scale sex pheromone"; J. Chem. Ecol., 7, 695 (1981)).

EP3504968 describes 3,7-dimethyl-7-octenyl propionate as a substance having sex pheromone activity on San Jose scale.

US4223012 describes (E)-3,7-dimethyl-2,7-octadien-1-yl propionate as a potent attractant for the male San Jose scale.

Bichina et al. describes geranyl propionate ((2E)-3,7-dimethyl-2,6-octadienyl propionate), neryl propionate ((2Z)3,7-dimethyl-2,6-octadienyl propionate), and myrcenyl propionate (2-methyl-6-methylene-oct-7-en-yl propionate), as sex pheromones for San Jose scale (Quadraspidiotus perniciosus). (Bichina et al., Chemical Abstracts 1987:454120).

Rice et al. reports on the efficacy of mating disruption pheromones in paraffin emulsion dispensers. They conclude that mating disruption of San Jose scale using pheromone in paraffin emulsions showed some reduction in crawler populations for two generations after treatment, but the cost of pheromone is prohibitive for commercial use. (Rice et al. IOBC/WPRS BULLETIN, Vol. 20, (1997).

### SUMMARY OF THE INVENTION

Among various scale insects, San Jose scale is known as an economically serious insect pest which infests and attacks a variety of fruit trees, causing damages, such as loss of commercial value of fruits and decline in plant vigor. As described above, due to the ecology of scale insects, insecticides are not effective for controlling those insect pests. There is no report on the mating disruption of San Jose scale by the use of a pheromone substance.

According to Non-Patent Literature 1, the pheromone preparations were installed such that 10 rubber septa were bound with a wire and placed at 167 locations in a 5-are field, i.e., 33,440 preparations per hectare. This is to attain efficient pest control by densely installing many pheromone preparations in the field so as to eliminate unevenness in the concentration because Japanese mealybug can move throughout the life, but only in a narrow range of the field.

On the other hand, San Jose scale can move only for several hours after hatching. Once it settles it loses the legs and stays in one place for the rest of its life. Therefore, it was previously considered that mating disruption of San Jose scale would require a larger number of pheromone preparations to be installed more densely, as compared with mating disruption of Japanese mealybug, to eliminate unevenness in the concentration, and therefore that pest control of San Jose scale with pheromone preparations would be impractical or difficult to practice in terms of economy and labor. This seems to be the reason why there was no report on pest control of San Jose scale with pheromone preparations.

An object of the present invention is to provide a method for controlling San Jose scale using a pheromone preparation comprising a pheromone substance of San Jose scale.

As a result of intensive researches, the present inventors have unexpectedly found that pest control of San Jose scale can be effected with a less number of pheromone preparations comprising a pheromone substance of San Jose scale, that is, the number of 200 to 5,000 preparations per hectare, which is likely to cause unevenness in the concentration, and thus have completed the present invention.

According to one aspect of the invention, there is provided a method for controlling San Jose scale, comprising at least a step of installing pheromone preparations in a field such that the number of the installed pheromone preparations ranges from 200 to 5,000 per hectare, each of the pheromone preparations comprising 7-methyl-3-methylene-7-octenyl propionate and one or more optional compounds selected from (Z)-3,7-dimethyl-2,7-octadienyl propionate and (E)- 3,7-dimethyl-2,7-octadienyl propionate as pheromone substance of San Jose scale and a container enclosing the pheromone substance therein, wherein the container is at least partially made of ethylene-vinyl acetate copolymer that allows the pheromone substance to permeate the container and to be released into the field, and wherein the amount of the pheromone substance loaded in each of the pheromone preparations ranges from 20 to 2,000 mg, and wherein the total amount of the pheromone substance installed in the field ranges from 5 to 500 g per hectare.

According to the invention, San Jose scale can be controlled with pheromone preparations comprising a pheromone substance, without the need to eliminate unevenness in the concentration by a dense installation of the pheromone preparations, so that damage to fruits can be mitigated in an economical and labor-saving way.

### DETAILED DESCRIPTION OF THE PREFERRED EMBODIMENTS

First, there will be described the pheromone preparation comprising a pheromone substance of San Jose scale and a container releasably enclosing the pheromone substance therein.

Examples of the pheromone substance of San Jose scale include 7-methyl-3-methylene-7-octenyl propionate, (Z)-3,7-dimethyl-2,7-octadienyl propionate and (E)-3,7-dimethyl-2,7-octadienyl propionate.

The pheromone substance of San Jose scale may be one extracted from the pest or one industrially synthesized. From an economical viewpoint, synthetic ones are preferred. The pheromone substance of San Jose scale may contain impurities inevitably associated in its production.

The pheromone substance of San Jose scale may be used alone or in combination of a plurality of pheromone substances.

For example, in a case where all of the three sex pheromone substances are used, 7-methyl-3-methylene-7-octenyl propionate, (Z)-3,7-dimethyl-2,7-octadienyl propionate and (E)-3,7-dimethyl-2,7-octadienyl propionate may be used in any weight ratio, because there is no substantial difference in their sex pheromone activities. The weight ratio ranges preferably (from 28 to 94):(from 2 to 67):(from 4 to 25), with the total being 100. From the viewpoint of possible development of resistance, and the natural compositional ratio reported by Anderson et al. (Non-Patent Literature 2), the weight ratio ranges preferably (from 28 to 68):(from 27 to 67):(from 5 to 25) and more preferably (from 38 to 58):(from 37 to 57):(from 5 to 15), with the total being 100.

The pheromone substance may be admixed, if necessary, with an additive (hereinafter also referred to as "additive for the pheromone substance"), such as a diluent, a polymerization inhibitor, an antioxidant, and an ultraviolet (UV) absorber.

Examples of the diluent include dodecyl acetate, tetradecyl acetate, hexadecyl acetate, 1-dodecanol, 1-tetradecanol, and 1-hexadecanol.

Examples of the polymerization inhibitor include 2,2'-methylenebis(4-methyl-6-t-butylphenol).

Examples of the antioxidant include 2,6-di-tert-butyl-4-methylphenol, butylhydroxytoluene, butylhydroxyanisole, hydroquinone, and vitamin E.

Examples of the UV absorber include 2-(2'-hydroxy-3'-tert-butyl-5'-methylphenyl)-5-chlorobenzotriazole, 2-hydroxy-4-octoxybenzophenone, 2-(3,5-di-t-butyl-2-hydroxyphenyl)-5-chlorobenzotriazole, and 2,5'-di-t-butylhydroquinone.

Although the amount of each additive for the pheromone substance may vary depending on the environment of use, it ranges preferably from 0.1 to 5.0 parts by weight based on 100 parts by weight of the pheromone substance of San Jose scale. Two or more additives for the pheromone substance may be used. The additive for the pheromone substance may be commercially available.

The container for the pheromone preparation may be any container, as long as at least a part of it (for instance, a wall of the container) comprises ethylene-vinyl acetate copolymer that allows the pheromone substance of San Jose scale to pass through so as to releasably enclose the pheromone substance. The container may be a polymeric container wholly composed of said copolymer.

From the viewpoints of releasability of the pheromone and processability, the content of vinyl acetate repeating unit derived from vinyl acetate in EVA ranges preferably from 0.5 to 10% by weight, more preferably from 0.5 to 6% by weight, and still more preferably from 0.5 to 3% by weight.

From the viewpoints of releasability of the pheromone and processability, EVA preferably has a weight average molecular weight (Mw) in the range of 50,000 to 500,000, although not limited thereto.

The weight average molecular weight (Mw) of EVA may be determined by gel permeation chromatography (GPC), relative to polystyrene standards.

The polymer may be formed into a membrane or a container, after the addition of an additive (hereinafter also referred to as "polymer additive"), such as an antioxidant and an ultraviolet (UV) absorber for preventing deterioration, and/or an antiblocking agent and a lubricant for improving the processability.

Examples of the antioxidant include phenolic antioxidants, such as ethylenebis(oxyethylene)bis(3-(5-tert-butyl-4-hydroxy-m-tolyl)propionate) and octadecyl-3-(3,5-di-tert-butyl-4-hydroxyphenyl)propionate; sulfur-based antioxidants, such as didodecyl 3,3'-thiodipropionate; and phosphorus-based antioxidants, such as tris(2,4-di-tert-butylphenyl)phosphite.

Examples of the UV absorbers include benzotriazole-based UV absorbers, such as 2-(2'hydroxy-3'-tert-butyl-5'-methylphenyl)-5-chlorobenzotriazole; and benzophenone-based UV absorbers, such as 2-hydroxy-4-octoxybenzophenone.

Examples of the antiblocking agents include metal salts of higher fatty acids, such as potassium stearate, barium stearate, zinc stearate, and magnesium stearate; and inorganic powders, such as silica, talc and diatomaceous earth.

Examples of the lubricant include hydrocarbons, such as liquid paraffin; alcohols, such as stearyl alcohol; higher fatty acids, such as stearic acid, behenic acid and 12-hydroxystearic acid; esters, such as glyceryl monostearate, glyceryl monooleate and butyl stearate; partial esters of a polyhydric alcohol such as triethylene glycol; natural waxes, such as paraffin; fatty amides, such as stearylamide, oleylamide, erucamide, methylene bisstearylamide and ethylene bisstearylamide; and polymers, such as polyethylene.

From the viewpoints of compatibility with the polymer and weatherability, the amount of each polymer additive ranges preferably from more than 0 to 3 parts by weight based on 100 parts by weight of the polymer. Two or more polymer additives may be used. The polymer additive may be one commercially available or synthesized.

In order to prevent the pheromone substance of San Jose scale from UV deterioration, one or more colorants, such as inorganic or organic colorants, may be added to the polymer prior to the formation of the membrane or the container.

Examples of the inorganic colorant include iron oxides, chromium oxides, titanium oxides and carbon black.

Examples of the organic colorant include polycyclic pigments, such as quinacridone red, phthalocyanine blue and phthalocyanine green; and azo pigments, such as monoazo yellow and disazo orange.

From the viewpoints of solvent resistance and light resistance, the amount of the colorant ranges preferably from more than 0 to 3 parts by weight, more preferably from more than 0 to 1 parts by weight, based on 100 parts by weight of the polymer. Two or more polymer additives may be used. The polymer additive may be one commercially available or synthesized.

The container in the pheromone preparation may be any container which can stably hold the pheromone substance of San Jose scale and can release the pheromone substance to the atmosphere. Examples of the container include, but not limited to, a tube, a laminate bag, a capsule, a can, a bottle and an ampoule. The container is at least partially made of ethylene-vinyl acetate copolymer that allows the pheromone substance of San Jose scale to pass through so as to allow the pheromone substance to be released into the field. Preferably, the container is wholly made of ethylene-vinyl acetate copolymer that allows the pheromone substance to pass through.

From the viewpoint of uniform release of the pheromone substance of San Jose scale, the pheromone preparation comprising a tubular container is preferred. The tubular container has an inner diameter of preferably from 0.5 to 2.5 mm, a surface area of preferably from 500 to 10,000 mm², and a membrane thickness of preferably from 0.3 to 0.8 mm. The length ranges preferably from 0.1 to 5.0 m, more preferably from 0.1 to 2.0 m, still more preferably from 0.2 to 1.0 m.

In a case where the pheromone preparation comprises a container other than the tubular container, the container preferably has a membrane thickness of from 0.01 to 0.1 mm. This is because a thicker membrane is more rigid, resulting in worse handling.

The amount of the pheromone substance of San Jose scale to be loaded in the pheromone preparation ranges preferably from 20 to 2,000 mg, more preferably from 50 to 500 mg, from the viewpoint of a dose per unit area and the number of the preparations to be installed.

Preferably, the pheromone preparation is of a sustained release type so as to ensure a release period as described below.

Typically, a container which holds the pheromone substance is sealed in order to prevent the pheromone substance from evaporating or leaking from the opening. This is made possible by the fact that the container of the pheromone preparation has a function of allowing the pheromone substance to pass through and releasing it into the field.

The pheromone preparation may be prepared by any process known in the art, such as a process comprising steps of forming a container, e.g., by blow molding or extrusion molding, introducing a liquid pheromone substance into the container, and sealing the container; or a process comprising steps of introducing, during the molding, a liquid pheromone substance through the route used for pushing out air, and sealing the container.

Next, there will be described the step of installing pheromone preparations in a field such that the number of the installed pheromone preparations ranges from 200 to 5,000 per hectare, each of the pheromone preparations comprising a pheromone substance of San Jose scale and a container enclosing the pheromone substance therein, to allow the pheromone substance to permeate the container and to be released into the field.

The number of the installed pheromone preparations ranges from 200 to 5,000 per hectare, preferably from 200 to 3,500 per hectare, more preferably from 200 to 1,500 per hectare. Although it was expected that unevenness in the concentration of pheromone substance in the field would increase with a decreasing number of installation, the present inventors have found that San Jose scale can be controlled even with the very small installation number, still more preferably from 200 to 500 preparations per hectare.

Prior to the present invention, it was believed that in order to control San Jose scale by mating disruption with a pheromone substance, dense installation with a large number of pheromone preparations in the field would be necessary to eliminate unevenness in the concentration, which is however impractical or difficult in terms of economy and labor. In contrast, the present inventors have found that San Jose scale can unexpectedly be controlled without such dense installation.

From an economical viewpoint, the total amount of the pheromone substance of San Jose scale in the field (amount of the pheromone substance of San Jose scale installed in the field) ranges preferably from 5 to 500 g/hectare, more preferably from 10 to 300 g/hectare, still more preferably from 15 to 250 g/hectare.

The amount of the pheromone substance to be released at one location may vary depending on the field environment and weather conditions, and is not particularly limited. From viewpoints of the amount per unit area and the number of the installed pheromone preparations, it ranges preferably from 0.01 to 1 mg/day/location, more preferably from 0.05 to 0.5 mg/day/location.

The release period of the pheromone substance is preferably determined based on a period of emergence of San Jose scale. For example, it is known that San Jose scale emerges during a prolonged period of from May to December in Tottori Prefecture, Japan, and from June to October in Aomori Prefecture, Japan.

It is efficient to set the pheromone preparations at a height preferably in the range of between 0.8 and 3.0 meters, more preferably between 1.0 and 2.5 meters from the ground, from viewpoints of ease of setting of the pheromone preparations and sufficient diffusion of the pheromone substance over the field. For example, the pheromone preparations may be suspended from a plant body. The preparations should be firmly set not to fall onto the ground. Otherwise, the pheromone substance will be absorbed into the soil.

As described above, the method for controlling San Jose scale using the pheromone preparation is provided.

### EXAMPLES

The invention will be further described with reference to the following Examples and Comparative Examples. It should not be construed that the invention is limited to or by them.

### Example 1 (comparative)

A mixture of 7-methyl-3-methylene-7-octenyl propionate, (Z)-3,7-dimethyl-2,7-octadienyl propionate and (E)-3,7-dimethyl-2,7-octadienyl propionate was prepared at a weight ratio of 94:2:4. This mixture was further mixed with 2,6-di-tert-butyl-4-methylphenol and 2-(2'-hydroxy-3'-tert-butyl-5'-methylphenyl)-5-chlorobenzotriazole in a weight ratio of 96:2:2 to produce a sex pheromone composition for San Jose scale. 180 Milligrams of this sex pheromone composition was placed in each tubular polyethylene container having an inner diameter of 1.18 mm, a membrane thickness of 0.65 mm and a length of 20 cm, to prepare pheromone preparation A.

Pheromone preparations A were installed in a 0.1-hectare apple field as a treatment area in a density of 1,000 preparations per hectare. These pheromone preparations A were set at a height in the range of between 1.5 and 1.8 m from the ground.

On 55-th day after the installation of pheromone preparations A, an adhesive tape of a size 1.8 cm x 10.0 cm was placed on each of 20 branches which were selected at random in each area. Seven days later, the adhesive tapes were collected and classified into five levels based on the area percentage occupied by larvae of San Jose scale on the adhesive tape according to the criteria shown below. As a result, thirteen adhesive tapes were at level 2 and seven adhesive tapes were at level 3, so that the larvae density level of the first generation was 47, as calculated according to the calculation formula shown below.

On 103-th day after the installation of pheromone preparations A, an adhesive tape of a size 1.8 cm x 10.0 cm was placed on each of the same 20 branches as described above. Seven days later, the adhesive tapes were collected and classified in the same manner. As a result, twenty adhesive tapes were at level 2, so that the larvae density level of the second generation was 40.

The mating disruption effect in the field was evaluated by a relative value of the second-generation larva density level relative to the first-generation larvae density level.

### Criteria on the number of larvae

Level 1: 0% of the area of the adhesive tape
Level 2: more than 0% to less than 10% of the area of the adhesive tape
Level 3: from 10% to less than 30% of the area of the adhesive tape
Level 4: from 30% to less than 50% of the area of the adhesive tape
Level 5: 50% or more of the area of the adhesive tape

### Calculation of a larvae density level:

Sum of (level × the number of adhesive tapes at that level)

### Comparative Example 1

In a reference area of an apple field, no pheromone preparation A was installed. Larvae density levels of the first and second generations were determined in the same manner as in Example 1.

That is, the adhesive tapes were placed on 55-th day after the installation of pheromone preparations A of Example 1 and were collected seven days later. As a result, seventeen adhesive tapes were at level 2, two adhesive tapes were at level 3 and one adhesive tape was at level 4, so that the larvae density level of the first generation was 44, as calculated according to the calculation formula shown above.

The adhesive tapes were placed on 103-th day after the installation of pheromone preparations A of Example 1 and were collected seven days later. As a result, thirteen adhesive tapes were at level 2 and seven adhesive tapes were at level 3, so that the larvae density level of the second generation was 47.

The mating disruption effect in the field was evaluated by a relative value of the second-generation larvae density level relative to the first-generation larvae density level. The results are shown in Table 1.

**Table 1**

| | Mating Disruptant | A Relative Value of the Larvae Density Levels |
|---|---|---|
| Example 1 | A | 85% |
| Comparative Example 1 | none | 107% |

As compared with the relative value of the larvae density levels in Comparative Example 1, the relative value of the larvae density levels in Example 1 was decreased. Example 1 shows that the relative value (40/47) is lower than 100%, that is, a decreased larvae density level for the second generation. This confirms that the pheromone preparation having the sex pheromone substances has a mating disruption effect on San Jose scale.

### Examples 2-4 (comparative)

A mixture of 7-methyl-3-methylene-7-octenyl propionate, (Z)-3,7-dimethyl-2,7-octadienyl propionate and (E)-3,7-dimethyl-2,7-octadienyl propionate was prepared in a weight ratio of 94:2:4. This mixture was further mixed with 2,6-di-tert-butyl-4-methylphenol and 2-(2'-hydroxy-3'-tert-butyl-5'-methylphenyl)-5-chlorobenzotriazole at a weight ratio of 96:2:2 to produce a sex pheromone composition for San Jose scale. 60 Milligrams of this sex pheromone composition was placed in each tubular polyethylene container having an inner diameter of 0.69 mm, a membrane thickness of 0.65 mm and a length of 20 cm, to prepare pheromone preparation B.

On September 6, pheromone preparations B were installed in three distinct one-hectare apple fields as three treatment areas in a density of 250; 1,000 or 3,000 preparations per hectare. These pheromone preparations B were set at a height of 1.2 m from the ground.

A pheromone trap for San Jose scale had been placed in each treatment area on August 27, and the number of male and female adult insects captured in each trap was counted for every one or two weeks during a period of from September 6 to February 5 of the next year. The results are shown in Table 2.

The term "Total number of the captured insects" shown in Table 2 indicates the total number of the male and female adult insects captured during the period of from September 6 to February 5 of the next year. Mating disruption rates were calculated according to the equation shown below. Mating disruption rate (%) = { 1-(number of the insects captured in a treatment area)/(number of the insects captured in an untreated area)}×100

### Comparative Example 2

During the same period as in Examples 2-4, the number of male and female adult insects captured in a trap was counted in an untreated area where a pheromone trap for San Jose scale was placed on August 27, without installation of pheromone preparation B. The results are shown in Table 2.

**Table 2**

| | Mating disruptant | Number of the installed preparations (/ha) | Total number of the captured insects | Mating disruption rate (%) |
|---|---|---|---|---|
| Example 2 | B | 250 | 2 | 97 |
| Example 3 | B | 1,000 | 1 | 98 |
| Example 4 | B | 3,000 | 0 | 100 |
| Comparative Example 2 | none | - | 58 | - |

In Examples 2-4, the total numbers of the captured insects were decreased as compared with Comparative Example 2, and the mating disruption rates were 95% or more. Accordingly, it is confirmed that the pheromone preparation having the sex pheromone substances has a mating disruption effect on San Jose scale.

Examples 2-4 also indicate that the mating disruption effect was exhibited sufficiently on San Jose scale even with the reduced numbers of the pheromone preparations per hectare.

### Example 5 and Comparative Example 6

A mixture of 7-methyl-3-methylene-7-octenyl propionate, (Z)-3,7-dimethyl-2,7-octadienyl propionate and (E)-3,7-dimethyl-2,7-octadienyl propionate was prepared in a weight ratio of 94:2:4. This mixture was further mixed with 2,6-di-tert-butyl-4-methylphenol and 2-(2'-hydroxy-3'-tert-butyl-5'-methylphenyl)-5-chlorobenzotriazole in a weight ratio of 96:2:2 to produce a sex pheromone composition for San Jose scale. 180 Milligrams of this sex pheromone composition was placed in each tubular container having an inner diameter of 1.18 mm, a membrane thickness of 0.65 mm and a length of 20 cm, made of EVA with a vinyl acetate unit content of 2 wt.%, to prepare pheromone preparation C.

On September 6, pheromone preparation C and pheromone preparations A prepared in Example 1 (comparative) were each installed in a one-hectare apple field as two treatment areas in a density of 1,000 preparations per hectare. These pheromone preparations A and C were set at a height of 1.2 m from the ground.

A pheromone trap for San Jose scale had been placed in each treatment area on August 27, and the number of the male and female adult insects captured in each trap was counted for every one or two weeks during a period of from September 6 to February 5 of the next year. The results are shown in Table 3.

**Table 3**

| | Mating disruptant | Number of the installed preparations (/ha) | Total number of the captured insects |
|---|---|---|---|
| Example 5 | C | 1,000 | 1 |
| Example 6 | A | 1,000 | 3 |

Example 5 confirm that the pheromone preparation having sex pheromone substances has a mating disruption effect on San Jose scale also when EVA is used as the polymer material.

## Claims

1. A method for controlling San Jose scale, comprising at least a step of installing pheromone preparations in a field such that the number of the installed pheromone preparations ranges from 200 to 5,000 per hectare, each of the pheromone preparations comprising a pheromone substance of San Jose scale and a container enclosing the pheromone substance therein, to allow the pheromone substance to permeate the container and to be released into the field,
wherein the San Jose scale is controlled by mating disruption,
wherein the pheromone substance is 7-methyl-3-methylene-7-octenyl propionate and one or more optional compounds elected from (Z)-3,7-dimethyl-2,7-octadienyl propionate and (E)-3,7-dimethyl-2,7-octadienyl propionate,
wherein the amount of the pheromone substance loaded in each of the pheromone preparations ranges from 20 to 2,000 mg, and wherein the total amount of the pheromone substance installed in the field ranges from 5 to 500 g per hectare, and
wherein the container is at least partially made of ethylene-vinyl acetate copolymer that allows the pheromone substance to pass through.

## Patentansprüche

1. Ein Verfahren zur Bekämpfung von San-José-Schildläusen, umfassend mindestens einen Schritt des Installierens von Pheromonpräparaten auf einem Feld, so dass die Anzahl der installierten Pheromonpräparate im Bereich von 200 bis 5000 pro Hektar liegt, wobei jedes der Pheromonpräparate eine Pheromonsubstanz für San-José-Schildläuse und einen Behälter, in dem die Pheromonsubstanz eingeschlossen ist, umfasst, um es der Pheromonsubstanz zu ermöglichen, den Behälter zu durchdringen und auf das Feld freigesetzt zu werden,
wobei die San-José-Schildläuse durch Störung der Paarung bekämpft werden,
wobei die Pheromonsubstanz 7-Methyl-3-methylen-7-octenylpropionat und eine oder mehrere fakultative Verbindungen, ausgewählt aus (Z)-3,7-Dimethyl-2,7-octadienylpropionat und (E)-3,7-Dimethyl-2,7-octadienylpropionat, ist,
wobei die Menge der Pheromonsubstanz, die in jedem der Pheromonpräparate enthalten ist, im Bereich von 20 bis 2000 mg liegt, und wobei die Gesamtmenge der Pheromonsubstanz, die auf dem Feld installiert ist, im Bereich von 5 bis 500 g pro Hektar liegt, und
wobei der Behälter zumindest teilweise aus Ethylen-Vinylacetat-Copolymer besteht, das es der Pheromonsubstanz ermöglicht, es zu durchdringen.

## Revendications

1. Procédé de contrôle de la cochenille de San José, comprenant au moins une étape d'installation de préparations de phéromone dans un champ de sorte que le nombre de préparations de phéromone installées s'étend de 200 à 5 000 par hectare, chacune des préparations de phéromone comprenant une substance de phéromone de la cochenille de San José et un récipient enfermant la substance de phéromone dans celui-ci, pour permettre à la substance de phéromone de pénétrer dans le récipient et d'être libérée dans le champ,
dans lequel la cochenille de San José est contrôlée par une perturbation de l'accouplement,
dans lequel la substance de phéromone est le 7-méthyl-3-méthylène-7-octényl propionate et un ou plusieurs composés facultatifs sélectionnés parmi le (Z)-3,7-diméthyl-2,7-octadiényl propionate et le (E) -3, 7-diméthyl-2, 7-octadiényl propionate,
dans lequel la quantité de la substance de phéromone chargée dans chacune des préparations de phéromone s'étend de 20 à 2 000 mg, et dans lequel la quantité totale de la substance de phéromone installée dans le champ s'étend de 5 à 500 g par hectare, et
dans lequel le récipient est au moins partiellement en copolymère d'éthylène-acétate de vinyle qui permet le passage de la substance de phéromone.
